(19) Europäisches Patentamt
European Patent Office
Office européen des brevets

(11) Publication number: **0 103 986**
**B1**

(12) **EUROPEAN PATENT SPECIFICATION**

(45) Date of publication of patent specification: **08.04.87**

(21) Application number: **83304769.9**

(22) Date of filing: **17.08.83**

(51) Int. Cl.⁴: **C 09 B 1/46,** C 09 B 1/516, C 09 B 1/54, C 09 B 1/58, C 09 B 67/00, C 09 B 63/00, C 09 C 3/08

(54) **Organic anthraquinone dyes containing silane groups, pigments and process for preparing the same.**

(30) Priority: **20.08.82 IT 2291582**

(43) Date of publication of application: **28.03.84 Bulletin 84/13**

(45) Publication of the grant of the patent: **08.04.87 Bulletin 87/15**

(84) Designated Contracting States: **BE DE FR GB NL**

(56) References cited:
**FR-A-2 401 962**
**GB-A-2 020 675**
**US-A-4 038 293**

(73) Proprietor: **Montedison S.p.A.**
**31, Foro Buonaparte**
**I-20121 Milan (IT)**

(72) Inventor: **Marraccini, Antonio**
**4 Corso Riviera**
**I-28040 Dormeletto Novara (IT)**
Inventor: **Carlini, Filippo Maria**
**7 Corso Torino**
**I-28100 Novara (IT)**
Inventor: **Pasquale, Antonio**
**8 Via Milano**
**I-28100 Novara (IT)**
Inventor: **Maranzana, Giorgio**
**51 Strada Fara**
**I-28100 Novara (IT)**

(74) Representative: **Whalley, Kevin et al**
**MARKS & CLERK 57/60 Lincoln's Inn Fields**
**London WC2A 3LS (GB)**

**EP 0 103 986 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new type of organic s-triazinyl-bis-anthraquinone dyes containing, in chemical combination, a silane group, to a process for preparing the same, and to the corresponding composite pigments, obtainable by association with an inorganic solid, and further to processes for obtaining such composite pigments.

Whenever used in the following description, the term "composite pigment" means a pigmentary material comprising an association of a dye according to the invention containing a silane group together with an inorganic solid substrate or support, as will be defined more in detail subsequently.

The association of the organic dye containing a silane group, or briefly silanic dye, with the solid support or substrate, allows a pigmentary nature to be imparted to the silanic organic dye. Such association is obtained by formation of chemical bonds (grafting) between the silanic part of the organic dye and the inorganic support or substrate.

In the literature there have been described processes for modifying with derivatives of silanic type the surface of materials such as $SiO_2$, $TiO_2$ and aluminas, utilized as fillers or non-coloured pigments. Thus, in the case of the fillers employed in many thermoplastic and thermosetting materials, in order to improve the adhesion between the filler and the other components, the filler or pigment so obtained may be finally coloured with conventional dye. Use is substantially made of common reactive or acid polysulphonic dyes, which do not contain silane residues, are soluble in water, and do not belong to the class of s-triazinyl-bis-anthraquinones.

French Patent Specification No. FR—A—2401962 describes a water-insoluble dye pigment especially useful in the colouring of plastic articles and a method of preparing the same by hydrolyzing a watersoluble dye with an organooxysilane and drying the resultant gel.

U.S. Patent No. US—A—4038293 describes quinonoid dyestuffs containing the tris(trimethylsilyloxy)silylalkylamino group, which are found to be compatible with cured silicone polymers.

It is an aim of the present invention to provide organic dyes containing silane groups, insoluble in water, suitable to provide composite pigments of high characteristics, by grafting on the surface of an inorganic support or substrate. It is also an aim of the invention to prepare the abovesaid types and the abovesaid pigments by simple and economic methods.

These aims, as will be more clearly apparent from the following disclosure, are achieved by a new class of silanic organic dyes of s-triazinyl-bis-anthraquinone type, by the composite pigments derivable therefrom, and by the relevant preparation processes.

Accordingly, the present invention in one aspect provides an organic s-triazinyl-bis-anthraquinone dye containing a silane group, having the formula:

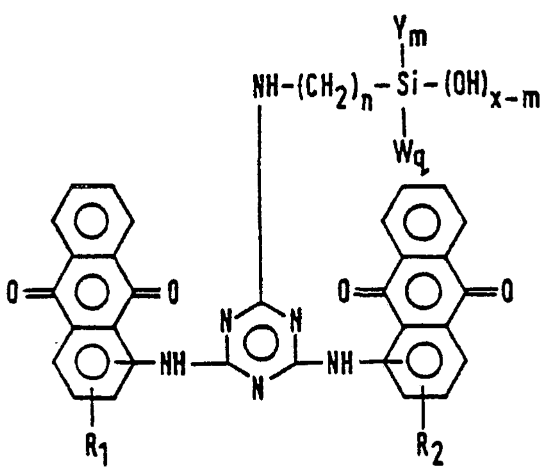

(I)

wherein

$R_1$ and $R_2$, which may be the same as or different from each other, are each a hydrogen atom, a primary amine group, a secondary amine gorup of the —NH—R type wherein R is an alkyl group containing from 1 to 4 carbon atoms or a phenyl group, an acetylamino (—NH—CO—$CH_3$) group, a benzoylamino (—NH—CO—$C_6H_5$) group, a nitro (—$NO_2$) group, a halogen, preferably bromine or chlorine, a hydroxyl radical, or a phenol (—O—$C_6H_5$) or a thiophenol (—S—$C_6H_5$) group;

n is 3, 4 or 5;

W is an alkyl group containing from 1 to 4 carbon atoms or a phenyl group;

q is 0 or 1;

Y is an alkoxy group containing from 1 to 4 carbon atoms; and

x and m are integers such that when q is 0 then x is 3 and m is 0, 1, 2 or 3, and when q is 1 then x is 2 and m is 0, 1 or 2.

The compounds according to the invention are silane compounds, in which the organic chromophoric part is ascribable to the class of s-triazinyl-bis-anthraquinone dyes, free from sulphonic groups.

The silanic compounds of formula (I) have a certain solubility in organic solvents and possess a good tinting strength with pure tonalities in a large range from yellow to red to blue with a good fastness towards the light.

Such dyes may be prepared, according to another aspect of the present invention, by a process wherein a silane derivative of formula (II)

$$H_2N{-}(CH_2)_n{-}\overset{\displaystyle Y_m}{\underset{\displaystyle W_q}{\overset{|}{\underset{|}{Si}}}}{-}(OH)_{x-m} \qquad (II)$$

wherein n, W, q, Y, x and m have the meanings already indicated, is reacted with a s-triazinyl-bis-anthraquinone derivative of formula (III)

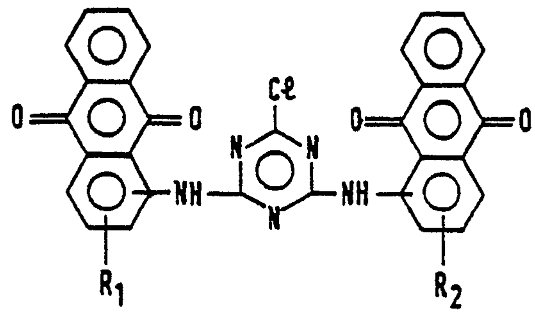

(III)

wherein $R_1$ and $R_2$ have the meanings already indicated, in an inert organic medium, at a temperature from 80° to 180°C, preferably in a time period of 1—5 hours, optionally in the presence of an acid-acceptor compound, in a substantially equimolar ratio of compound of formula (II): compound of formula (III).

The inert organic medium is preferably selected from nitrobenzene, dichlorobenzene, and dimethylformamide.

As acidity acceptors use can be made of inorganic compounds such as $Na_2CO_3$ and $NaHCO_3$ or organic compounds such as triethylamine or pyridine, in substantially stoichiometric amounts with respect to the derivative (III).

The halogen-s-triazinyl-bis-anthraquinone derivatives of formula (III) are compounds which can be prepared, according to conventional techniques, for instance by condensation with cyanuric chloride of aminoanthraquinone derivatives of formula (IV), known in themselves.

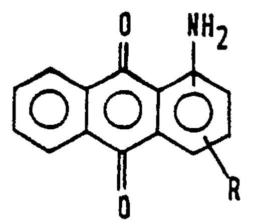

(IV)

wherein, with respect to formula (III), R indicates $R_1$ or $R_2$, as hereinabove defined, in organic solvents such as nitrobenzene, dichlorobenzene or dimethylformamide or in water-acetonitrile mixtures, at temperatures from 0°C to 130°C during 2—6 hours.

Examples of aminoanthraquinone derivatives employable, according to the present invention, are; α-amino-anthraquinone; β-amino-anthraquinone; 1,4-diamino-anthraquinone; 1,5-diamino-anthraquinone; 1-amino-4-acetylamino-anthraquinone; 1-amino-4-benzoylamino-anthraquinone; 1-amino-5-acetylamino-anthraquinone; 1-amino-5-benzoylamino-anthraquinone; 1-amino-4-nitro-anthraquinone; 1-amino-5-nitro-anthraquinone; 1-amino-4-bromo-anthraquinone; 1-amino-4-methylamino-anthraquinone; and 1-amino-4-phenylamino-anthraquinone. These compounds, in their turn, are known compounds, which can be prepared according to conventional techniques or are commercially available.

Silane derivatives of formula (II), which have proved to be particularly suitable for preparing silanic dyes of formula (I), according to the present invention, are those derived from amino-alkoxy-silanes, such as γ-aminopropyl-triethoxysilane, δ-aminobutyl-triethoxysilane, δ-aminobutyl-phenyl-diethoxysilane, and γ-aminopropyl-methyl-diethoxysilane. These compounds are known and commercially available. However, they can be prepared according to substantially conventional techniques, for instance by reacting the corresponding chloro-alkoxy-silane, such as γ-chloro-propyl-triethoxysilane, with an aliphatic amine.

The silanic dyes of formula (I) do not possess, in themselves, any pigmentary characteristics. Nevertheless, according to their structural characteristics, the presence in the molecule of silanolic groups and/or alkoxy groups, hydrolyzable to silanolic groups —$Si(OH)_3$, imparts to the structure the capability both of providing self-condensation reactions between the silanolic groups and of chemically reacting with the surface of suitable inorganic supports or substrates, provided with surface hydroxyl groups (—OH), which condense with those of the silanic dye (I), thus forming a stable chemical bond (grafting) with the support or substrate and giving rise to a product having pigmentary characteristics.

The above-mentioned condensation reactions of silanic dye (I) with the inorganic support or substrate and condensation reactions between molecules of dye (I), allow silanic dyes (I) to chemically "graft" to the support or substrate surface, thus giving rise to a composite structure, within quantitative ratios controllable in the preparation process.

Therefore the dyes according to the invention may be employed in the preparation of composite pigments, and this constitutes a further aspect of the present invention, comprising a silanic dye of formula (I), grafted on an inorganic support or substrate.

The silanic compounds of general formula (I) proved to be particularly suitable to provide composite pigments when the secondary amine group that forms a bridge between the cyanurilic nucleus:

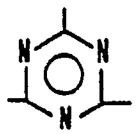

and the anthraquinonic system:

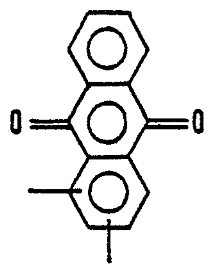

are linked in the alpha position of the latter, $R_1$ and $R_2$ are the same as each other and bounded in position 4 or 5 of the anthraquinonic system, and q is 0.

As substrates or supports, particularly suitable for imparting the pigmentary nature to the silanic dyes of formula (I), the following are advantageously used: $TiO_2$, in its gel, semi-crystalline, rutile or anatase forms, also of the commercial type, characterized in themselves by the presence of surface coatings, comprising mixtures containing one or more oxides selected from $SiO_2$, $Al_2O_3$, $TiO_2$, or it is possible to employ physical mixtures of $TiO_2$ with $SiO_2$ and/or $Al_2O_3$ or, finally $SiO_2$ and/or $Al_2O_3$, finely particulated. Alumino-silicates (clays), mica and talc are employable as well.

The specific surface area of such materials may vary within a wide range, from 5 to 500 $m^2/g$, and advantageous results are obtained with values ranging from 10 to 200 $m^2/g$.

As to the uses, desired hiding power, etc., the abovesaid substrates or supports may be also utilized in mixtures with each other.

The composite pigments containing from 10 to 50% by weight of the silanic dye of formula (I) in the grafted form are particularly preferred owing to their improved characteristics.

The process for preparing composite pigments consisting of s-triazinyl-bis-anthraquinone dyes and of the above inorganic supports comprises treating the selected support or substrate with a silanic dye (I) in a reaction medium comprising an organic inert solvent, at a temperature from 20°C to the solvent reflux temperature, preferably from 60° to 150°C, and in the presence of water (acid due to HCl or alkaline due to NaOH), in an at least equimolecular ratio with respect to the alkoxy groups of the dye to be hydrolyzed, or in a reaction medium comprising optionally acid or alkaline water at a temperature from 20° to 90°C.

After 2—16 hours of the abovesaid treatment and optionally after a partial distillation of the reaction medium, the pigment is filtered, the obtained wet paste is treated at 100—140°C for 2—16 hours, optionally hot washed with organic solvent and finally dried. By employing the organic solvent it is possible to use silanic dye (I) that has been previously hydrolyzed by means of optionally slightly acid or alkaline water at a temperature of 20—90°C for 1—4 hours. By using the water as reaction medium, the substrate can be formed "*in situ*", by precipitation in the presence of the silanic dye. To improve the condensation of the dye coating on the support or substrate it can be advantageously operated in the presence of a catalyst such as LiOH, $CF_3COOH$, Pb acetate, or cobalt naphthenate.

Further advantages can be achieved when the process is carried out also in the presence of a tetra-alkoxy-silane having up to 4 carbon atoms, such as $Si(OCH_3)_4$, or a vinyl-trialkoxy-silane having up to 4 carbon atoms, such as $H_2C{=}CH{-}Si{-}(OC_2H_5)_3$, or an alkyl-ortho-titanate having up to 4 carbon atoms, such

as $Ti(OC_4H_9)_4$, in amounts ranging from 0.1:1 to about 1:1 by weight referred to the dye of formula (I), with which they form insoluble copolymers, which are particularly suitable for coating the support or substrate.

The inert organic solvents employed are preferably selected from aliphatic hydrocarbons (n-heptane) and chlorinated derivatives thereof (tetrachloroethane), alicyclic and aromatic hydrocarbons (benzene, toluene, xylenes, nitrobenzene, chlorobenzenes), alkyl or aryl ethers and ketones (N-methyl-pyrrolidone, diphenylether), oxides (dioxane), amides (dimethylformamide), nitriles (acetonitrile), and sulphoxides (dimethylsulphoxide).

The preparation process is particularly suitable for obtaining brightly dyed pigments, with a high tinting strength, also in the presence of an inorganic support or substrate having a low specific surface, such as highly hiding $TiO_2$.

The composite pigments obtained according to the present invention have compositions varying within a wide range, depending on the nature and the amount of silanic dye and of the inorganic support or substrate, the granulometry, and the specific surface area. They exhibit excellent pigmentary characteristics, are insoluble in water and in the common organic solvents, and possess furthermore a good tinting strength, an excellent stability to heat, and fastness towards light, towards bases and towards acids, towards migration into plastics materials such as polyvinylchloride (PVC), toward overpainting in stoving enamels, and are easily dispersible. Finally they may be obtained both in the transparent form and in a very hiding form.

Therefore the composite pigments obtained according to the present invention are best utilized in painting products, in air and stoving enamels, in pigmentation of plastics materials, in inks, and in pastes for the printing of fabrics, according to conventional applicative techniques.

The composite pigments obtained according to the present invention exhibit the advantage of comprising a portion, of inorganic support or substrate, of low cost and capable of imparting excellent pigmentary characteristics, and having, in particular, the desired degree of hiding power, on which support or substrate portion an organic dye with a high tinting strength and pure tones may be grafted.

Such an advantage can be better appreciated if it is considered that organic silanic dyes (I), as abovementioned, may be more or less soluble in organic solvents and therefore may not possess by themselves any pigmentary characteristic, which is, on the contrary, attained by the composite pigments of the present invention.

This permits, in more than one application, the organic dyes to be improved, successfully and economically extending the use thereof to pigmentary applications which are very interesting from an industrial point of view.

In this respect, the present invention represents a considerable contribution to the solution of the problem represented by the high toxicity connected with the utilization of inorganic pigments, which are broadly employed and now objectionable from this point of view, such as the pigments based on chromium and lead.

Granulometric analysis of the composite pigments obtained according to the present invention shows that the inorganic portion is essentially distributed on the surface of the inorganic substrate particles.

The mechanical and/or thermic treatments employed in the conventional techniques for the use of the pigments in the various application fields do not substantially modify the granulometry and, as a consequence, the pigmentary characteristics of the products obtained according to the present invention.

The invention will be further described with reference to the following illustrative Examples. In the Examples, all parts and percentages are by weight unless otherwise stated.

## Example 1

Preparation of the silanic derivative of 2-chloro-4,6-bis(1-amino-anthraquinonyl)-2-triazine.

A dispersion of 22.3 parts of 1-aminoanthraquinone in 200 ml of nitrobenzene was brought to 100°C and additioned with 9.22 parts of cyanuryl chloride and successively brought to 190°C for 2 hours. The reaction mixture was filtered at a temperature of 150°C and the cake was washed several times with methanol and then with n-heptane and was dried in an oven at a temperature of 110°C. About 23 parts of 2-chloro-4,6-bis-(1-aminoanthraquinonyl)-s-triazine were obtained, which upon elemental analysis gave the following results:

| | %C | H | Cl | N |
|---|---|---|---|---|
| calculated | 66.73 | 2.87 | 6.37 | 12.55 |
| found | 66.8 | 2.9 | 6.2 | 12.5 |

The suspension of 17.32 parts of 2-chloro-4,6-bis(1-aminoanthraquinonyl)-s-triazine in 130 ml of nitrobenzene was brought to 100°C and additioned with 7.1 parts of γ-aminopropyl-triethoxy-silane and with 2.07 parts of $K_2CO_3$, and then was gradually brought to the reflux temperature of the solvent.

After 2 hours the resulting product was cooled down to room temperature, filtered, and washed several times with n-heptane. The filter-dried cake was pulped in 200 parts of water and stirred at the boiling temperature for about 2 hours, and was subsequently filtered at 70—80°C, repeatedly washed with methanol and air-dried.

19.5 Parts of a powder having a deep yellow-reddish colour were obtained, which upon elemental analysis gave the following results:

% C = 63 % H = 4.35 % N = 12.2 % Si = 4.1.

The determination of the ethanol per cent by hydrolysis in a Carius tube gave the following result: ethanol % = 6.5.

The obtained dye, subjected to infrared spectrophotometric analysis, showed, among other bands, absorption bands characteristic of the —Si—($OC_2H_5$) group at 960 $cm^{-1}$, 1170 $cm^{-1}$, 1080 $cm^{-1}$ and 1110 $cm^{-1}$.

The above said analyses and IR analysis correspond to a dye of formula (A)

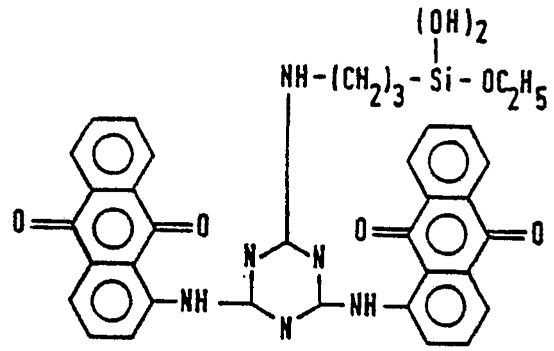

(A)

For the synthesis of the corresponding composite pigment according to the present invention the rough reaction product, partially hydrolyzed, was advantageously employed.

Example 2

Preparation of the composite pigment in organic solvent.

In this preparation a mixed inorganic substrate of $TiO_2$, $SiO_2$ and $Al_2O_3$ was utilized, that had been prepared as follows: 100 parts of $TiO_2$ were dispersed under mechanical stirring in 1000 ml of water; the dispersion was heated to 60°C. After stirring for 15 minutes, 210 ml of a sodium silicate solution (titre: 365.47 parts/l of $SiO_2$) and successively, in about 3 hours, about 200 ml of an Al sulphate solution (titre: 60 parts/l of $Al_2O_3$) were added.

The addition was stopped when the pH of the slurry had reached a value of 6. The slurry was kept under stirring at 60°C for 1 hour, then the product was filtered, washed with water to remove the soluble salts and finally dried at a temperature of 70°C. The dry product was crushed and then ground in an automatic mortar. A white powder was obtained having the following composition: % $TiO_2$ = 43.4; % $SiO_2$ = 35.1; % $Al_2O_3$ = 7.15; % crystallization water = 14.35; and specific surface area = 112 $m^2/g$.

The composite pigment was prepared by forming a suspension of 0.75 parts of silanic dye (A) of Example 1, 1.75 parts of the inorganic substrate prepared as above, in 100 ml of dimethylformamide and 0.5 parts of water, which suspension was brought to the reflux temperature of the solvent and kept at this temperature under stirring for 8 hours.

Successively part of the solvent was continuously distilled and restored for 2 hours. The suspension was concentrated to 1/4 of the initial volume of the solvent and, after addition of 25 ml of xylene, it was filtered at a temperature of 90°C. The cake was dried in an oven at 110°C overnight, hot washed with 100 ml of a mixture of 50% of dimethylformamide and xylene, hot filtered, filter-washed with n-heptane and dried in an oven at 110°C. A yellow product was obtained, which by burning, was found to consist of 71% of inorganic ashes and had the following composition: % C = 13.85; % H = 1.75; % N = 2.64.

The coloured powder proved to be particularly fast towards treatments, also in hot conditions, with organic or aqueous solvents; in applications such as stoving enamels or in plastics materials, such as polyvinylchloride, provided yellow-coloured products with a particularly pure tone, having an excellent hiding power and a high tinting strength, and also excellent general stabilities in particular to overpainting and migration; and also had a good fastness towards heat and light both in bulk (mass) and upon dilution with $TiO_2$.

The silanic dye (A) of Example 1 does not possess by itself those pigmentary characteristics, which, conversely, are provided according to the present invention by grafting on an inorganic substrate, such as the fastness towards solvents, towards overcoating, and towards migration in applications in stoving enamels or in plastics materials.

Example 3

Preparation of the composite pigment in water.

1 Part of $TiO_2$, dispersed under mechanical stirring in 100 parts of water, was additioned with 0.8 parts of silanic dye (A) of Example 1 and brought to 60°C. After 15 minutes 2.1 ml of sodium silicate (titre: 365.47 parts/l of $SiO_2$) and successively, in about 3 hours, about 2 ml of an Al sulphate solution (titre: 60 parts/l of $Al_2O_3$) were added.

The addition was stopped when the pH of the slurry had reached a value of 6. The slurry was kept under stirring at 60°C for 1 hour, then the product was filtered, washed with water to remove the soluble salts and dried at a temperature of 110°C overnight. A powder was obtained having a deep yellow colour, which by burning at 950°C, was found to consist of 70% of inorganic ashed and had the following composition: % C = 14.99; % H = 1.64; % N = 3.17.

The yellow coloured composite pigment exhibited pigmentary, optical characteristics, hiding power and tinting strength and general applicative fastnesses similar to those of the product obtained according to Example 2, except for a slightly more reddish tonality.

Example 4

By replacing the inorganic substrate of Example 2 with $SiO_2$ having a high specific surface area approximately equal to 200 $m^2/g$ and by operating according to weight ratios and in a manner similar to that of Example 2, a bright yellow powder was obtained, which, by burning at 900°C, was found to consist of 72% of inorganic ashes.

The composite pigment proved to be particularly fast toward aqueous or organic solvents, also in hot conditions; in applications both in stoving enamels and in polyvinylchloride (PVC), it provided transparent products having high general fastness towards migration, overpainting, light and heat, as well as a high tinting strength.

Example 5

By operating as in Example 3, by employing 0.8 parts of dye (A) of Example 1, 4.5 ml of Na silicate and about 4 ml of Al sulphate, in the absence of $TiO_2$, a bright yellow pigment was obtained, consisting of 67% of inorganic ashes, and having the following composition: % C = 14.57; % H = 2.08; % N = 3.3. The pigment was perfectly transparent, fast towards both aqueous and organic solvents, and in applications both in stoving enamels and in polyvinylchloride, it provided yellow products which are perfectly transparent, possess a considerable gloss and excellent pigmentary and applicative characteristics.

Example 6

By replacing the inorganic substrate of Example 2 with $TiO_2$ of commercial type or with mixtures of $TiO_2$ of commercial type and $SiO_2$ having a specific surface area of about 200 $m^2/g$ and by operating under similar conditions to those of Example 2, composite pigments with good general fastnesses and a very high hiding power — in the case of $TiO_2$ alone — with a decreasing hiding power — in the case of the mixtures — were obtained.

Example 7

The preparation of the composite pigment of Example 2 was repeated with the addition of 0.5 ml of vinyl-triethoxysilane and traces of benzoyl peroxides; by operating under conditions similar to those described in Example 2, a yellow powder was obtained, which, upon elemental analysis, was found to consist of 69% of inorganic ashes. The composite pigment, besides possessing pigmentary characteristics and general fastnesses similar to those of the product of Example 2, exhibited an even better tinting strength in the abovesaid applications.

Example 8

The preparation of the composite pigment of Example 2 was repeated, with the addition of 0.5 parts of butyl-ortho-titanate[$Ti(o\text{-}butyl)_4$]. By operating under conditions similar to those described in Example 2, a yellow powder was obtained, which on elemental analysis was found to consist of 70% of inorganic ashes. The composite pigment, besides possessing pigmentary characteristics and general fastnesses similar to those of the product of Example 2, exhibited an even better tinting strength, in the abovesaid applications.

Examples 9—25

By operating according to the technique of Example 1 various silanic dyes were prepared, and successively by operating according to the techniques of Examples 2 and 3 the relevant composite pigments were prepared, by utilizing the amino-alkoxysilanes, the s-triazinyl-bis-anthraquinone dyes and the substrates indicated in Table 1. The obtained composite pigments having various chromaticity exhibited pigmentary characteristics and general fastnesses similar to those of the products obtained according to Examples 2 and 3.

TABLE 1

| | s-triazinyl-bis-anthraquinone dye | Amino- -alkoxysilane | Substrate | Tone |
|---|---|---|---|---|
| 9 | 2-chloro-4,6-bis-(1,4-diaminoanthra-quinonyl)-s-triazine | γ-amino-propyl-triethoxy-silane | $TiO_2$, $SiO_2$, $Al_2O_3$ of Example 2 | violet |
| 10 | 2-chloro-4,6-bis-(1,4-diaminoanthra-quinonyl)-s-triazine | γ-amino-propyl-triethoxy-silane | $SiO_2$, $Al_2O_3$ of Example 5 | violet |
| 11 | 2-chloro-4,6-bis-(2-amino-anthraqui-nonyl)-s-triazine | γ-amino-propyl-triethoxy-silane | $SiO_2$, $Al_2O_3$ of Example 5 | yellow |
| 12 | 2-chloro-4,6-bis-(1,5-diamino--anthraquinonyl)-s-triazine | γ-amino-propyl-triethoxy-silane | $TiO_2$, $SiO_2$, $Al_2O_3$ of Example 2 | red |
| 13 | 2-chloro-4,6-bis-(1-amino-4-acetyl-amino-anthraquinonyl)-s-triazine | γ-amino-propyl-triethoxy-silane | $TiO_2$, $SiO_2$ $Al_2O_3$ of Example 2 | red |
| 14 | 2-chloro-4,6-bis-(1-amino-4-acetyl-amino-anthraquinonyl)-s-triazine | γ-amino-propyl-triethoxy-silane | $SiO_2$ of Example 4 | red |
| 15 | 2-chloro-4,6-bis-(1-amino-4-acetyl-amino-anthraquinonyl)-s-triazine | γ-amino-propyl-triethoxy-silane | $SiO_2$, $Al_2O_3$ of Example 5 | red |
| 16 | 2-chloro-4,6-bis-(1-amino-5-acetyl-amino-anthraquinonyl)-s-triazine | γ-amino-propyl-triethoxy-silane | $SiO_2$, $Al_2O_3$ of Example 5 | yellow |
| 17 | 2-chloro-4,6-bis-(1-amino-5-acetyl-amino-anthraquinonyl)-s-triazine | γ-amino-propyl-triethoxy-silane | $TiO_2$, $SiO_2$, $Al_2O_3$ of Example 2 | yellow |

TABLE 1 (Continued)

| | s-triazinyl-bis-anthraquinone dye | Amino-<br>-alkoxysilane | Substrate | Tone |
|---|---|---|---|---|
| 18 | 2-chloro-4,6-bis-(1-amino-4- -phenylamino-anthraquinonyl)- -s-triazine | γ-amino-propyl-triethoxy-silane | $TiO_2$, $SiO_2$, $Al_2O_3$ of Example 2 | blue |
| 19 | 2-chloro-4,6-bis-(1-amino-4- -phenylamino-anthraquinonyl)- -s-triazine | γ-amino-propyl-triethoxy-silane | $SiO_2$, $Al_2O_3$ of Example 5 | blue |
| 20 | 2-chloro-4,6-bis-(1-amino-4- -phenylamino-anthraquinonyl)- -s-triazine | δ-amino-butyl triethoxy-silane | $SiO_2$, $Al_2O_3$ of Example 5 | blue |
| 21 | 2-chloro-4,6-bis-(1-amino-4- -phenylamino-anthraquinonyl)- -s-triazine | δ-amino-butyl phenyl-diethoxy-silane | $SiO_2$, $Al_2O_3$ of Example 5 | blue |
| 22 | 2-chloro-4,6-bis-(1-amino-4-hydroxy-anthraquinonyl)-s- -triazine | γ-amino-propyl-triethoxy-silane | $SiO_2$, $Al_2O_3$ of Example 5 | red |
| 23 | 2-chloro-4,6-bis-(1-amino-4-bromo- -anthraquinonyl)-s-triazine | γ-amino-propyl-triethoxy-silane | $SiO_2$, $Al_2O_3$ of Example 5 | red |
| 24 | 2-chloro-4,6-bis-(1-amino-4-phenoxy- -anthraquinonyl)-s-triazine | γ-amino-propyl-triethoxy-silane | $SiO_2$, $Al_2O_3$ of Example 5 | red |
| 25 | 2-chloro-4,6-bis-(1-amino-4- -thiophenoxy-anthraquinonyl)- -s-triazine | γ-amino-propyl-triethoxy-silane | $SiO_2$, $Al_2O_3$ of Example 5 | red |

Example 26

(Application in PVC)

In a rotary arm mixer there were mixed, at 70°C:

1.0 part of the pigment obtained according to Example 2;

100 parts of powdered polyvinyl chloride (PVC);

1.5 parts of calcium stearate exerting a complexing and stabilizing action;

3.0 parts of epoxidized soybean oil;

0.5 part of lubricant (mixture of glycerides from $C_{16}$ to $C_{36}$);

2.0 parts of $TiO_2$.

The thus obtained mixture was then treated at 180°C in a three-roll refiner until complete dispersion of the pigment in order to obtain a sheet exhibiting a particularly pure and and highly hiding yellow tone, with a good colour strength, a food fastness towards light, a good tinting strength, a good fastness towards heat, and an excellent fastness towards migration.

Example 27

(Application in enamel)

5.0 Parts of the pigment obtained according to Example 2 were mixed by grinding with 95.0 parts of afluid vehicle having the following composition:

22% of alkyl resin

19% of melamine resin

59% of xylene.

The homogenization was carried out in a ball mill by grinding the mixture in the presence of porcelain balls having a diameter of 10 mm for a period of 24 hours.

The thus obtained enamel was applied onto the surface to be painted, was allowed to dry overnight and then was kept in an oven at 120°—125°C for 20 minutes.

A painting was obtained exhibiting a pure yellow tone, an excellent hiding power, a good tinting strength, and a fastness towards light and towards overpainting.

In order to obtain a paint having a lighter tone and a higher hiding power, 1 part of the enamel obtained as described was further diluted with 9 parts of a white synthetic stoving enamel (10% of $TiO_2$) having the following composition:

30% of alkyd resin;

27% of melamine resin;

33% of xylene;

10% of $TiO_2$.

The homogenization was carried out in a ball mill by grinding the mixture in the presence of porcelain balls having a diameter of 10 mm, for a period of 24 hours.

The thus obtained cut enamel was applied onto the surface to be painted, was allowed to dry ovenight and then was kept in an oven at 120°—125°C for 30 minutes.

A paint was obtained exhibiting a pure light yellow tone, good general fastnesses and a high hiding power.

**Claims**

1. An organic s-triazinyl-bis-anthraquinone dye, characterized by having the formula:

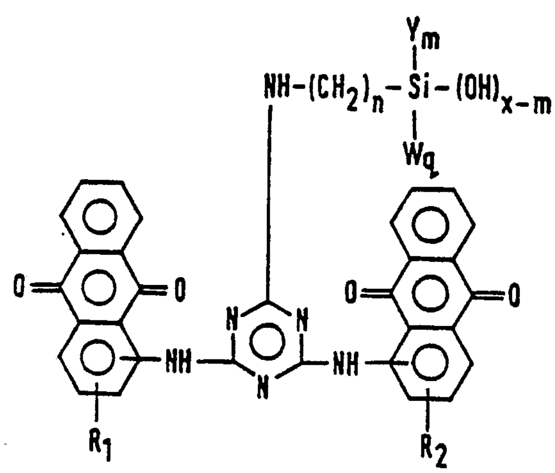

(I)

wherein:

$R_1$ and $R_2$, which may be the same as or different from each other, are each a hydrogen atom, a primary

amine group, a secondary amine group of the —NH—R type wherein R is an alkyl group containing from 1 to 4 carbon atoms or a phenyl group, an acetylamino group, a benzoylamino group, a nitro group, a halogen, a hydroxyl radical, or a phenol or a thiophenol group;

n is 3, 4 or 5;

W is an alkyl group containing from 1 to 4 carbon atoms or a phenyl group;

q is 0 or 1;

Y is an alkoxy group containing from 1 to 4 carbon atoms; and

x and m are integers such that when q is 0 then x is 3 and m is 0, 1, 2 or 3, and when q is 1 then x is 2 and m is 0, 1 or 2.

2. A dye as claimed in Claim 1, characterized in that the secondary amine group forming a bridge between the cyanurilic nucleus;

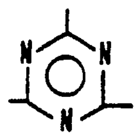

and the anthraquinonic system:

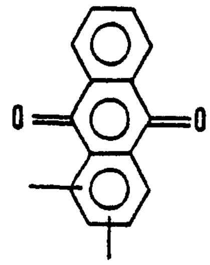

are linked in the alpha position of the latter, in that $R_1$ and $R_2$ are the same as each other and bounded in position 4 or 5 of the anthraquinonic system, and in that q is 0.

3. A dye as claimed in Claim 1 or 2, characterized in that the anthraquinonic residue is derived from α-amino-anthraquinone, β-amino-anthraquinone, 1,4-diamino-anthraquinone, 1,5-diamon-anthraquinone, 1-amino-4-acetylamino-anthraquinone, 1-amino-4-benzoylamino-anthraquinone, 1-amino-5-acetylamino-anthraquinone, 1-amino-5-benzoylamino-anthraquinone, 1-amino-4-nitro-anthraquinone, 1-amino-5-nitro-anthraquinone, 1-amino-4-bromo-anthraquinone, 1-amino-4-methylamino-anthraquinone, or 1-amino-4-phenylamino-anthraquinone.

4. A dye as claimed in any of Claims 1 to 3, characterized in that the amino-alkoxysilanic residue is derived from γ-aminopropyl-triethoxy-silane, δ-aminobutyl-triethoxy-silane, δ-aminobutyl-phenyl-diethoxy-silane, or γ-aminopropyl-methyl-diethoxy-silane.

5. A dye as claimed in any of Claims 1 to 4, characterized in that $R_1$ and $R_2$ are chlorine or bromine.

6. A process for preparing a dye according to Claim 1 or 5, characterized in that a silane derivative of formula:

$$H_2N—(CH_2)_n—\underset{\displaystyle W_q}{\overset{\displaystyle Y_m}{\overset{|}{\underset{|}{Si}}}}—(OH)_{x-m} \qquad (I)$$

wherein n, W, q, Y, x and m have the meanings indicated in Claim 1, is reacted with a s-triazinyl-bis-anthraquinone derivative of formula:

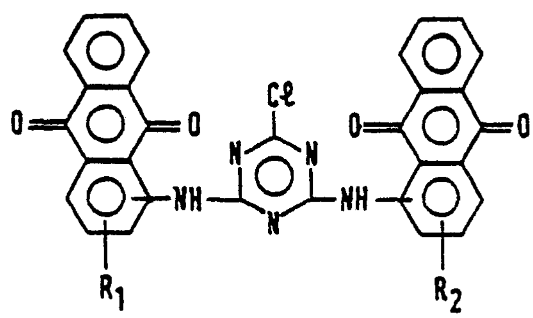

(III)

wherein $R_1$ and $R_2$ have the meanings indicated in Claim 1 or 5, in an inert organic medium, at a

temperature from 80° to 180°C, in a substantially equimolecular ratio of compound of formula (II): compound of formula (III).

7. A process as claimed in Claim 6, characterized in that the inert organic medium is selected from nitrobenzene, dichlorobenzene, and dimethylformamide.

8. A process as claimed in Claim 6 or 7, characterized in that the reaction is carried out in the presence of a stoichiometric amount, referred to compound of formula (III), of an acid acceptor compound.

9. A process as claimed in Claim 8, characterized in that the acid acceptor compound is selected from sodium carbonate, sodium bicarbonate, triethylamine, and pyridine.

10. A composite pigment, characterized by comprising a s-triazinyl-bis-anthraquinone dye as claimed in any of Claims 1 to 5 grafted on an inorganic support or substrate.

11. A composite pigment as claimed in Claim 10, characterized in that the said inorganic support or substrate is selected from $TiO_2$ gel, semi-crystalline $TiO_2$, rutile $TiO_2$, and anatase $TiO_2$, associated with $Al_2O_3$, $SiO_2$, $TiO_2$, $TiO_2$ with $Al_2O_3$ and/or $SiO_2$, aluminium silicates, mica, talc and/or mixtures thereof, and has a specific surface area of from 5 to 500 $m^2/g$.

12. A composite pigment as claimed in Claim 11, characterized in that the said support or substrate has a specific surface area of from 10 to 200 $m^2/g$.

13. A composite pigment as claimed in any of Claims 10 to 12, characterized by containing from 10 to 50% by weight of the silanic dye of formula (I) in grafted form.

14. A process for preparing a composite pigment according to Claim 10, characterized in that the said support or substrate is treated with a silanic dye as defined in any of Claims 1 to 5 in a reaction medium comprising an inert organic solvent, at a temperature from 20°C to the solvent reflux temperature, in the presence of water acid due to HCl or water alkaline due to NaOH, in an at least equimolar ratio with respect to the alkoxy groups of the dye and then, after an optional partial distillation of the solvent and of the water, the obtained pigment is filtered and the wet paste is treated at 100°C—140°C during a time period from 2 to 16 hours.

15. A process as claimed in Claim 14, characterized in that the said reaction is carried out at a temperature from 60°C to 150°C.

16. A process as claimed in Claim 14 or 15, characterized in that the silanic dye as defined in any of Claims 1 to 5 is first separately hydrolyzed by means of optionally slightly acid or alkaline water.

17. A process for preparing a pigment according to Claim 10, characterized in that the said support or substrate is treated with a silanic dye as defined in any of Claims 1 to 5 in a reaction medium comprising optionally acid or alkaline water at a temperature from 20° to 90°C and then the obtained pigment is filtered and the wet paste is teated at 100°C—140°C during a time period from 2—16 hours.

18. A process as claimed in any of Claims 14 to 17, characterized in that a catalytic amount of a catalyst is additionally employed.

19. A process as claimed in Claim 18, characterized in that the catalyst is LiOH, $CF_3COOH$, Pb acetate, or cobalt naphthenate.

20. A process as claimed in any of Claims 14 to 17, characterized by the presence of a compound selected from tetra-alkoxy-silanes, vinyl-trialkyl-silanes, and alkyl-ortho-titanates, having up to 4 carbon atoms, in a weight ratio, referred to the dye, of about 1:1 to 0.1:1.

21. A process as claimed in Claim 20, characterized by the presence of a compound selected from $Si(OCH_3)_4$, $H_2C = CH—Si(OC_2H_5)_3$, and $Ti(OC_4H_9)_4$ in a weight ratio, referred to the dye, of about 1:1 to 0.1:1.

22. Use of a composite pigment for dyeing plastics materials, preferably polyvinylchloride, characterized in that the said composite pigment is as claimed in any of Claims 10 to 13.

23. Use of a composite pigment for preparing paints, stoving enamels and air enamels, inks and pastes for the printing of fabrics, characterized in that the said composite pigment is as claimed in any of Claims 10 to 13.

24. A plastics material, paint, stoving enamel, air enamel, ink, or paste for the printing of fabric, characterized by being dyed with a composite pigment as claimed in any of Claims 10 to 13.

**Patentansprüche**

1. Organischer s-Triazinyl-bis-anthrachinon-Farbstoff, gekennzeichnet durch die Formel:

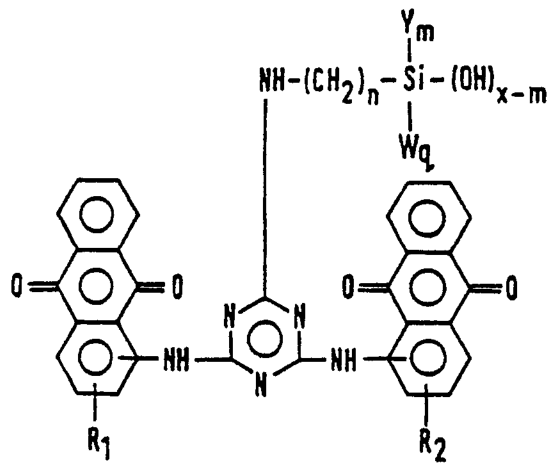

(I)

in welcher

$R_1$ und $R_2$, die gleich oder verschieden sein können, jeweils für ein Wasserstoffatom, eine primäre Amingruppe, eine sekundäre Amingruppe des Typs —NH—R, wobei R eine Alkylgruppe mit 1 bis 4 Kohlenstoffatomen oder eine Phenylgruppe ist, eine Acetylaminogruppe, eine Benzoylaminogruppe, eine Nitrogruppe, Halogen, ein Hydroxylradikal oder eine Phenol- oder eine Thiophenolgruppe stehen;

n gleich 3, 4, oder 5 ist;

W eine Alkylgruppe mit 1 bis 4 Kohlenstoffatomen oder eine Phenylgruppe darstellt;

q gleich 0 oder 1 ist;

Y eine Alkoxygruppe mit 1 bis 4 Kohlenstoffatomen bedeutet; und

x und m derartige ganze Zahlen sind, daß, wenn q gleich 0 ist, x gleich 3 und m gleich 0, 1, 2 oder 3 ist und, wenn q für 1 steht, x gleich 2 und m gleich 0, 1 oder 2 ist.

2. Farbstoff nach Anspruch 1, dadurch gekennzeichnet, daß die sekundären Amingruppen, die eine Brücke zwischen dem Cyanur-Kern:

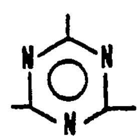

und dem Anthrachinon-System:

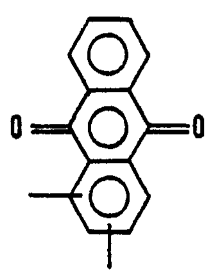

bilden, in der α-Position an das letztere gebunden sind, daß $R_1$ und $R_2$ gleich sind und in Position 4 oder 5 an das Anthrachinon-System gebunden sind und daß q gleich 0 ist.

3. Farbstoff nach Anspruch 1 oder 2, dadurch gekennzeichnet, daß der Anthrachinon-Rest abgeleitet ist von α - Aminoanthrachinon, β - Aminoanthrachinon, 1,4 - Diaminoanthrachinon, 1,5 - Diaminoanthrachinon, 1 - Amino - 4 - acetylaminoanthrachinon, 1 - Amino - 4 - benzoylaminoanthrachinon, 1 - Amino - 5 - acetylaminoanthrachinon, 1 - Amino - 5 - benzoylaminoanthrachinon, 1 - Amino - 4 - nitroanthrachinon, 1 - Amino - 5 - nitroanthrachinon, 1 - Amino - 4 - bromanthrachinon, 1 - Amino - 4 - methylaminoanthrachinon oder 1 - Amino - 4 - phenylaminoanthrachinon.

4. Farbstoff nach einem der Ansprüche 1 bis 3, dadurch gekennzeichnet, daß der Amino-alkoxysilan-Rest abgeleitet ist von γ-Aminopropyl-triethoxysilan, δ-Aminobutyl-triethoxysilan, δ-Aminobutyl-phenyl-diethoxysilan oder γ-Aminopropyl-methyl-diethoxysilan.

5. Farbstoff nach einem der Ansprüche 1 bis 4, dadurch gekennzeichnet, daß $R_1$ und $R_2$ Chlor oder Brom darstellen.

6. Verfahren zur Herstellung eines Farbstoffs nach den Ansprüchen 1 bis 5, dadurch gekennzeichnet, daß ein Silan-Derivat der Formel:

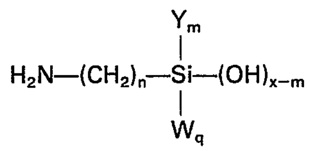

(II)

in welcher n, W, q, Y, x und m die in Anspruch 1 angegebenen Bedeutungen haben, mit einem s-Triazinyl-bis-anthrachinon-Derivat der Formel:

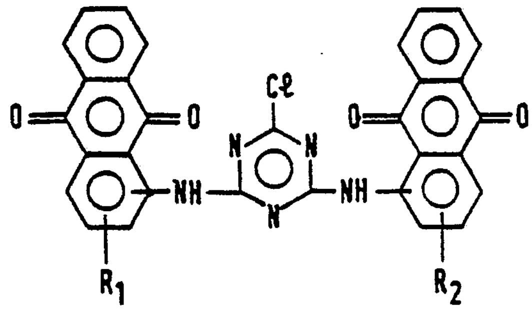

(III)

in welcher $R_1$ und $R_2$ die in Anspruch 1 oder 5 angegebenen Bedeutungen haben, in einem inerten organischen Medium bei einer Temperatur von 80 bis 180°C in einem praktisch äquimolaren Verhältnis von Verbindung der Formel (II) zu Verbindung der Formel (III) umgesetzt wird.

7. Verfahren nach Anspruch 6, dadurch gekennzeichnet, daß das inerte organische Medium aus Nitrobenzol, Dichlorbenzol und Dimethylformamid ausgewählt wird.

8. Verfahren nach Anspruch 6 oder 7, dadurch gekennzeichnet, daß die Reaktion in Anwesenheit einer stöchiometrischen Menge, bezogen auf die Verbindung der Formel (III), einer Säureakzeptor-Verbindung durchgeführt wird.

9. Verfahren nach Anspruch 8, dadurch gekennzeichnet, daß die Säureakzeptor-Verbindung ausgewählt wird aus Natriumcarbonat, Natriumbicarbonat, Triethylamin und Pyridin.

10. Zusammengesetztes Pigment, dadurch gekennzeichnet, daß es einen in einem der Ansprüche 1 bis 5 beanspruchten s-Triazinyl-bis-anthrachinon-Farbstoff, der auf einen anorganischen Träger oder ein Substrat gepfropft ist, umfaßt.

11. Zusammengesetztes Pigment nach Anspruch 10, dadurch gekennzeichnet, daß der anorganische Träger oder das Substrat aus $TiO_2$-Gel, semi-kristallinem $TiO_2$, Rutil-$TiO_2$ und Anatas-$TiO_2$, assoziiert mit $Al_2O_3$, $SiO_2$, $TiO_2$, $TiO_2$ mit $Al_2O_3$ und/oder $SiO_2$, Aluminiumsilicaten, Glimmer, Talk und/oder Mischungen davon ausgewählt ist und daß er (es) eine spezifische Oberfläche von 5 bis 500 $m^2/g$ aufweist.

12. Zusammengesetztes Pigment nach Anspruch 11, dadurch gekennzeichnet, daß Träger oder Substrat eine spezifische Oberfläche von 10 bis 200 $m^2/g$ aufweisen.

13. Zusammengesetztes Pigment nach einem der Ansprüche 10 bis 12, dadurch gekennzeichnet, daß es 10 bis 50 Gewichtsprozent des Silan-Farbstoffs der Formel (I) in gepfropfter Form enthält.

14. Verfahren zur Herstellung eines zusammengesetzten Pigments nach Anspruch 10, dadurch gekennzeichnet, daß Träger oder Substrat mit einem Silan-Farbstoff wie in einem der Ansprüche 1 bis 5 definiert in einem Reaktionsmedium, das ein inertes organisches Lösungsmittel umfaßt, bei einer Temperatur von 20°C bis zur Rückflußtemperatur des Lösungsmittels in Anwesenheit von Wasser, das aufgrund von HCl sauer oder von Wasser, das aufgrund von NaOH basisch ist, in wenigstens äquimolarem Verhältnis, bezogen auf die Alkoxygruppen des Farbstoffs, behandelt wird und daß danach, nach einer gegebenenfalls partiellen Destillation des Lösungsmittels und des Wassers, das erhaltene Pigment filtriert und die nasse Paste bei 100°C bis 140°C für eine Zeitspanne von 2 bis 16 Stunden behandelt wird.

15. Verfahren nach Anspruch 14, dadurch gekennzeichnet, daß die Reaktion bei einer Temperatur von 60°C bis 150°C durchgeführt wird.

16. Verfahren nach Anspruch 14 oder 15, dadurch gekennzeichnet, daß der wie in einem der Ansprüche 1 bis 5 definierte Silan-Farbstoff zuerst mit Hilfe von gegebenenfalls leicht saurem oder alkalischem Wasser getrennt hydrolysiert wird.

17. Verfahren zur Herstellung eines Pigments nach Anspruch 10, dadurch gekennzeichnet, daß Träger oder Substrat mit einem wie in einem der Ansprüche 1 bis 5 definierten Silan-Farbstoff in einem Reaktionsmedium, das gegebenenfalls saures oder alkalisches Wasser umfaßt, bei einer Temperatur von 20°C bis 90°C behandelt wird und daß daraufhin das erhaltene Pigment filtriert und die nasse Paste bei 100°C bis 140°C für eine Zeitspanne von 2 bis 16 Stunden behandelt wird.

18. Verfahren nach einem der Ansprüche 14 bis 17, dadurch gekennzeichnet, daß zusätzlich eine katalytische Menge eines Katalysators eingesetzt wird.

19. Verfahren nach Anspruch 18, dadurch gekennzeichnet, daß der Katalysator LiOH, $CF_3COOH$, Bleiacetat oder Kobaltnaphthenat ist.

20. Verfahren nach einem der Ansprüche 14 bis 17, dadurch gekennzeichnet, daß eine Verbindung, ausgewählt aus Tetra-alkoxysilanen, Vinyl-trialkylsilanen und Alkyl-ortho-titanaten mit bis zu 4 Kohlenstoffatomen in einem Gewichtsverhältnis von ungefähr 1:1 bis 0,1:1, bezogen auf den Farbstoff, anwesend ist.

21. Verfahren nach Anspruch 20, dadurch gekennzeichnet, daß eine Verbindung, ausgewählt aus $Si(OCH_3)_4$, $H_2C = CH—Si(OC_2H_5)_3$ und $Ti(OC_4H_9)_4$ in einem Gewichtsverhältnis von ungefähr 1:1 bis 0,1:1, bezogen auf den Farbstoff, anwesend ist.

22. Verwendung eines zusammengesetzten Pigments zur Färbung von Kunststoffmaterialien, vorzugsweise Polyvinylchlorid, dadurch gekennzeichnet, daß das zusammengesetzte Pigment eines der in einem der Ansprüche 10 bis 13 beanspruchten ist.

23. Verwendung eines zusammengesetzten Pigments zur Herstellung von Farben, Einbrennlacken und lufttrocknenden Lacken, Druckfarben und Pasten für das Bedrucken von Stoffen, dadurch gekennzeichnet, daß das zusammengesetzte Pigment eines der in einem der Ansprüche 10 bis 13 beanspruchten ist.

24. Kunststoffmaterial, Farbe, Einbrennlack, lufttrocknender Lack, Druckfarbe oder Paste für das Bedrucken von Stoffen, dadurch gekennzeichnet, daß sie mit einem zusammengesetzten Pigment nach einem der Ansprüche 10 bis 13 gefärbt sind.

**Revendications**

1. Un colorant organique à base de s-triazinyl-bis-anthraquinone caractérisé en ce qu'il présente la formule:

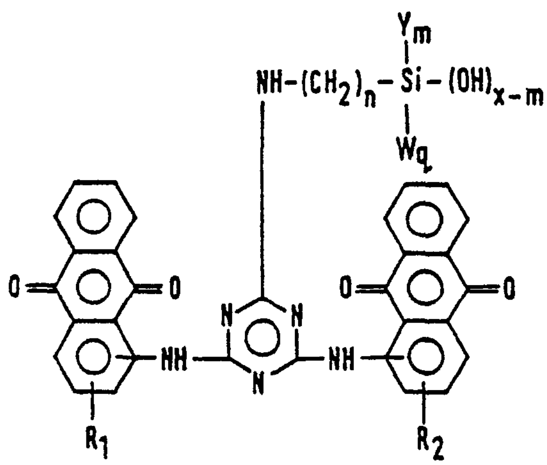

(I)

dans laquelle:

$R_1$ et $R_2$, qui peuvent identiques ou différents l'un de l'autre, consistent chacun en un atome d'hydrogène, un groupe amine primaire, un groupe amine secondaire du type —NH—R dans lequel R est un radical alkyle contenant 1 à 4 atomes de carbone ou un groupe phényle, un groupe acétylamino, un groupe benzoylamino, un groupe nitro, un halogène, un radical hydroxyle, ou un groupe phénol ou thiophénol;

n est égal à 3, 4 ou 5;

W est un radical alkyle contenant 1 à 4 atomes de carbone ou un groupe phényle;

q est égal à 0 ou à 1;

Y est un groupe alkoxy contenant 1 à 4 atomes de carbone; et

x et m sont des nombres entiers tels que, lorsque q est égal à 0, x est égal à 3 et m est égal à 0, 1, 2 ou 3, et lorsque q est égal à 1, x est alors égal à 2 et m est égal à 0, 1 ou 2.

2. Un colorant ainsi que revendiqué dans la revendication 1, caractérisé en ce que le groupe amine secondaire formant un pont entre le noyau cyanuryle:

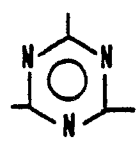

et le système anthraquinonique:

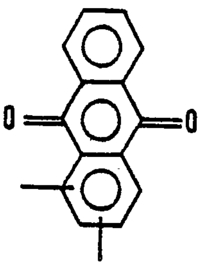

est lié en position alpha de ce dernier, et en ce que $R_1$ et $R_2$ sont identiques et liés en position 4 ou 5 du système anthraquinonique, q étant égal à 0.

3. Un colorant ainsi que revendiqué dans la revendication 1 ou 2, caractérisé en ce que le résidu anthraquinonique est dérivé des groupes suivants: α - amino - anthraquinone, β - amino - anthraquinone, 1,4 - diamino - anthraquinone, 1,5 - diamino - anthraquinone, 1 - amino - 4 - acétylamino - anthraquinone, 1 - amino - 4 - benzoylamino - anthraquinone, 1 - amino - 5 - acétylamino - anthraquinone, 1 - amino - 5 - benzoylamino - anthraquinone, 1 - amino - 4 - nitro - anthraquinone, 1 - amino - 5 - nitro - anthraquinone, 1 - amino - 4 - bromo - anthraquinone, 1 - amino - 4 - methylamino - anthraquinone, ou 1 - amino - 4 - phénylamino - anthraquinone.

4. Un colorant ainsi que revendiqué dans l'une quelconque des revendications 1 à 3, caractérisé en ce que le résidu amino-alkoxysilane dérive de l'un des radicaux du groupe formé par γ-aminopropyl-triéthoxy-silane, δ-aminobutyl-triéthoxy-silane, δ-aminobutyl-phényl-diéthoxy-silane, ou γ-aminopropyl-méthyl-diéthoxy-silane.

5. Un colorant ainsi que revendiqué dans l'une quelconque des revendications 1 à 4, caractérisé en ce que $R_1$ et $R_2$ sont un atome de chlore ou un atome de brome.

6. Un procédé de préparation d'un colorant selon la revendication 1 ou 5, caractérisé en ce qu'un dérivé silanique de formule:

$$H_2N-(CH_2)_n-\overset{\displaystyle Y_m}{\underset{\displaystyle W_q}{Si}}-(OH)_{x-m} \qquad (II)$$

dans laquelle n, W, q, Y, x et m ont les significations indiquées dans la revendication 1, est amené à réagir avec un dérivé s-triazinyl-bis-anthraquinone de formule:

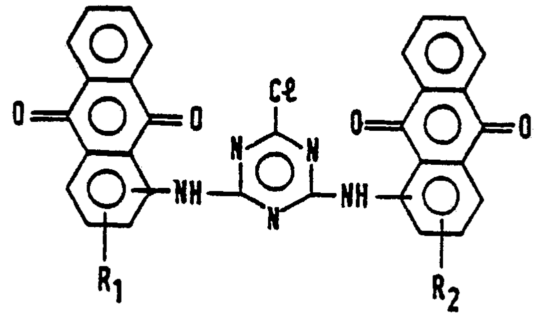

(III)

dans laquelle $R_1$ et $R_2$ ont les significations indiquées dans la revendication 1 ou 5, dans un milieu organique inerte, à une température comprise entre 80°C et 180°C, en un rapport composé de formule (II)/composé de formule (III) substantiellement équimolaire.

7. Un procédé ainsi que revendiqué dans la revendication 6, caractérisé en ce que le milieu organique inerte est choisi dans le groupe comprenant le nitrobenzène, le dichlorobenzène et le diméthylformamide.

8. Un procédé ainsi que revendiqué dans la revendication 6 ou 7, caractérisé en ce que la réaction est mise en oeuvre en présence d'une quantité stoechiométrique, exprimée par rapport au composé de formule (III), d'un composé accepteur d'acide.

9. Un procédé ainsi que revendiqué dans la revendication 8, caractérisé en ce que le composé accepteur d'acide est choisi parmi le carbonate de sodium, le carbonate acide de sodium, la triéthylamine et la pyridine.

10. Un pigment composite caractérisé en ce qu'il consiste en un colorant s-triazinyl-bis-anthraquinone ainsi que revendiqué dans l'une quelconque des revendications 1 à 5, greffé sur un substrat ou un support minéral.

11. Un pigment composite ainsi que revendiqué dans la revendication 10, caractérisé en ce que le substrat ou support minéral est choisi dans le groupe comprenant le gel de $TiO_2$, $TiO_2$ semi-cristallin, $TiO_2$ rutile et $TiO_2$ anatase, associé à $Al_2O_3$, $SiO_2$, $TiO_2$, $TiO_2$ plus $Al_2O_3$ et/ou $SiO_2$, les silicates d'aluminium, le mica, le talc et/ou leurs mélanges, et en ce qu'il présente une aire spécifique comprise entre 5 et 500 $m^2/g$.

12. Un pigment composite ainsi que revendiqué à la revendication 11, caractérisé en ce que ledit support ou substrat présente une aire spécifique comprise entre 10 et 200 $m^2/g$.

13. Un pigment composite ainsi que revendiqué dans l'une quelconque des revendications 10 à 12, caractérisé en ce qu'il contient de 10 à 50% en poids du colorant silanique de formule (I) sous forme greffée.

14. Un procédé de préparation d'un pigment composite selon la revendication 10, caractérisé en ce que ledit support ou substrat est traité par un colorant silanique ainsi que défini dans l'une quelconque des revendications 1 à 5, dans un milieu de réaction comprenant un solvant organique inerte, à une température comprise entre 20°C et la température du reflux du solvant, en présence d'eau acidifiée par HCl ou d'eau alcalinisée par NaOH, dans un rapport au moins équimolaire par rapport au groupe alkoxy du colorant et en ce qu'après éventuelle distillation partielle du solvant et de l'eau, le pigment obtenu est filtré puis la pâte humide résultante est traitée à une température comprise entre 100°C et 140°C durant une période de 2 à 16 heures.

15. Un procédé ainsi que revendiqué dans la revendication 14, caractérisé en ce que ladite réaction est effectuée à une température comprise entre 60°C et 150°C.

16. Un procédé ainsi que revendiqué dans la revendication 14 ou 15, caractérisé en ce que le colorant silanique tel que défini dans l'une quelconque des revendications 1 à 5, est tout d'abord séparé par hydrolyse grâce à une éventuelle addition d'eau légèrement acide ou alcaline.

17. Un procédé de préparation d'un pigment selon la revendication 10, caractérisé en ce que ledit support ou substrat est traité par un colorant silanique tel que défini dans l'une quelconque des revendications 1 à 5, dans un milieu de réaction comprenant éventuellement de l'eau alcalinisée ou acidifiée, à une température comprise entre 20° et 90°C et en ce que le pigment obtenu est alors filtré puis la pâte humide résultante est traitée entre 100°C et 140°C durant une période de 2 à 16 heures.

18. Un procédé ainsi que revendiqué dans l'une quelconque des revendications 14 à 17, caractérisé en ce qu'une quantité efficace d'un catalyseur est en outre employée.

19. Un procédé ainsi que revendiqué dans la revendication 18, caractérisé en ce que le catalyseur consiste en LiOH, $CF_3COOH$, acétate de plomb ou naphténate de cobalt.

20. Un procédé ainsi que revendiqué dans l'une quelconque des revendications 14 à 17, caractérisé par la présence d'un composé choisi parmi les tétra-alkoxy-silanes, les vinyl-trialkyl-silanes et alkyl-ortho-titanates, comprenant jusqu'à 4 atomes de carbone, en un rapport pondéral, exprimé par rapport au colorant, de l'ordre de 1/1 à 0,1/1.

21. Un procédé ainsi que revendiqué dans la revendication 20, caractérisé par la présence d'un composé choisi parmi $Si(OCH_3)_4$, $H_2C{=}CH{-}Si(OC_2H_5)_3$, et $Ti(OC_4H_9)_4$ en un rapport pondéral, exprimé par rapport au colorant, de l'ordre de 1/1 à 0,1/1.

22. Utilisation d'un pigment composite pour la teinture de matériaux plastiques, de préférence le chlorure de polyvinyle, caractérisée en ce que ledit pigment composite est tel que revendiqué dans l'une quelconque des revendications 10 à 13.

23. Utilisation d'un pigment compose pour la préparation de peintures, d'émaux à cuisson et d'émaux à séchage, d'encres et de pâtes pour l'impression de tissus, caractérisée en ce que le pigment composite précité est tel que revendiqué dans l'une quelconque des revendications 10 à 13.

24. Une matière plastique, une peinture, un émail à cuisson, un émail à séchage, une encre ou une pâte pour l'impression de tissus, caractérisés en que ce tissu est teint à l'aide d'un pigment composite ainsi que revendiqué dans l'une quelconque des revendications 10 à 13.